(19) Europäisches Patentamt / European Patent Office / Office européen des brevets

(11) **EP 4 152 464 A1**

(12) **EUROPEAN PATENT APPLICATION**
published in accordance with Art. 153(4) EPC

(43) Date of publication:
**22.03.2023 Bulletin 2023/12**

(21) Application number: **21803391.8**

(22) Date of filing: **10.05.2021**

(51) International Patent Classification (IPC):
***H01M 10/0562*** *(2010.01)*   ***H01B 1/06*** *(2006.01)*
***H01B 13/00*** *(2006.01)*

(52) Cooperative Patent Classification (CPC):
**H01B 1/06; H01B 13/00; H01M 10/0562;**
Y02E 60/10

(86) International application number:
**PCT/JP2021/017663**

(87) International publication number:
**WO 2021/230189 (18.11.2021 Gazette 2021/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.05.2020 JP 2020084787**

(71) Applicant: **Idemitsu Kosan Co., Ltd**
**Tokyo 100-8321 (JP)**

(72) Inventors:
• **SHIMADA, Shogo**
  **Sodegaura-shi, Chiba 299-0293 (JP)**
• **ISHIBASHI, Hirofumi**
  **Sodegaura-shi, Chiba 299-0293 (JP)**
• **KAGOTA, Yasuhito**
  **Sodegaura-shi, Chiba 299-0293 (JP)**

(74) Representative: **Vossius & Partner**
**Patentanwälte Rechtsanwälte mbB**
**Siebertstraße 3**
**81675 München (DE)**

(54) **SOLID ELECTROLYTE PRODUCING METHOD**

(57)    There is provided a solid electrolyte production method which can provide a solid electrolyte having a high ion conductivity at low cost with high productivity using a liquid-phase method. The method comprises drying a slurry by fluidized drying using media particles as a medium. The slurry includes a solid electrolyte comprising at least an alkali metal, sulfur atoms and phosphorus atoms as constituent atoms, or a precursor of the solid electrolyte, and a polar solvent.

EP 4 152 464 A1

## Description

Technical Field

The present invention relates to a method for producing a solid electrolyte.

Background Art

With the recent rapid spread of information devices and communication devices, such as personal computers, video cameras and mobile phones, importance is placed on the development of a battery for use as a power source for such devices. In conventional batteries for use in such applications, an electrolytic solution containing a flammable organic solvent has been used. The use of a flammable organic solvent can be eliminated by fully solidifying a battery. This enables simplification of a safety device and improvement in the production cost and the productivity. Therefore, butteries which use a solid electrolyte layer instead of an electrolytic solution are being developed.

Methods for producing a solid electrolyte to be used for a solid electrolyte layer are roughly classified into a solid-phase method and a liquid-phase method. The liquid-phase method involves allowing a raw material to react in a solvent to obtain a solid electrolyte, and includes a homogeneous method in which a material(s) for a solid electrolyte is completely dissolved in a solvent, and a heterogeneous method in which a material(s) for a solid electrolyte is not completely dissolved in a solvent; the material(s) and the solvent are brought into a solid-liquid coexisting suspension (slurry).

The liquid-phase method necessitates a drying step in order to remove a solvent and obtain a powdery solid electrolyte. The drying step is generally performed in a batchwise manner, for example, by drying using a heater such as a hot plate, by vacuum drying using a vacuum pump or the like, or by stirring/drying using a stirring blade or the like, whose type may differ depending on the process scale, to perform stirring during the drying step.

With reference to the liquid-phase method, a known homogeneous method involves dissolving a solid electrolyte in a solvent, and allowing the electrolyte to re-precipitate (see, for example, patent document 1). A known heterogeneous method involves allowing raw materials for a solid electrolyte, such as lithium sulfide, to react in a solvent including a polar aprotic solvent (see, for example, patent document 2). In the liquid-phase methods described in these patent documents, the respective drying steps are performed by vacuum drying. Patent document 3 discloses a liquid-phase method for producing a solid electrolyte, which comprises evaporating a solvent by using a liquid or gaseous medium at a temperature which is higher than the temperature of the solvent used, thereby precipitating an argyrodite crystal structure.

Citation List

Patent Literature

PTL 1: JP No. 2014-191899A
PTL 2: WO 2014/192309A
PTL 3: JP No. 2019-169459A

Summary of Invention

Technical Problem

In recent years, there has been a demand not only to produce a solid electrolyte having excellent properties such as a high ion conductivity, but also to produce it at a lower cost in a larger amount. On the one hand, the present inventors, through their intensive studies, have found that batchwise drying methods, such as vacuum drying as disclosed in patent documents 1 and 2, are poor in the operating efficiency. In addition, such methods have difficulty in performing uniform drying. This is likely to cause aggregation of a particulate product, such as a solid electrolyte or a precursor thereof, produced by the liquid-phase method, resulting in a deterioration of the product quality. Moreover, such a tendency increases with increase in the amount of drying.

On the other hand, high-temperature drying of a drying object is conceivable in order to perform uniform drying of the object. However, the application of the heat history of the high-temperature drying to the object has proven to be likely to cause dissolution of atoms constituting the object, in particular halogen atoms, resulting in a deterioration of the quality of the product, such as a reduction in the ion conductivity. It is also conceivable to dry an object at a low temperature in order to avoid the deterioration of the product quality due to the heat history. However, such a low-temperature drying requires a long drying time to remove a solvent, resulting in poor productivity. The vacuum drying as disclosed in patent documents 1 and 2 is not good in productivity and does not meet the demand to produce a solid electrolyte having excellent properties, such as a high ion conductivity, more easily in a large amount, i.e., with high productivity. The method disclosed in patent document 3, which uses the medium, can efficiently produce a solid electrolyte; however, there is still room for improvement.

The present invention has been made in view of the above situation. It is therefore an object of the present invention to provide a production method which can provide a solid electrolyte having a high ion conductivity with high productivity using a liquid-phase method.

Solution to Problem

The present inventors, through their intensive studies to solve the above problem, have found the following which has led to the completion of the present invention.

1. When a slurry of a solid electrolyte or a precursor thereof, dispersed in a polar solvent, is heated and dried at a normal rate, there occurs a deteriorative reaction peculiar to the system: a component, which easily dissolves in the polar solvent, is dissolved by heat from the solid electrolyte or the precursor thereof. This makes it difficult to obtain a solid electrolyte having a high ion conductivity. On the other hand, when the slurry is dried by vacuum drying without heating, it is difficult to achieve a production efficiency that enables mass production.
2. When the slurry is dried by fluidized drying using media particles, the slurry is dried instantaneously on the surfaces of the media particles which have been pre-heated. Therefore, the above-described deteriorative reaction can be reduced. This makes it possible to efficiently produce a solid electrolyte having a high ion conductivity.

Thus, the present inventors have found that the above problem can be solved by the following invention.

1. A method for producing a solid electrolyte, comprising drying a slurry by fluidized drying using media particles as a medium, the slurry including a solid electrolyte comprising at least an alkali metal, sulfur atoms and phosphorus atoms as constituent atoms, or a precursor of the solid electrolyte, and a polar solvent.
2. The method for producing a solid electrolyte as set forth in item 1 above, wherein the solid electrolyte further comprises halogen atoms as constituent atoms.
3. The method for producing a solid electrolyte as set forth in item 1 or 2 above, wherein the precursor of the solid electrolyte has a structure in which the alkali metal, the sulfur atoms and the phosphorus atoms are bonded together via the polar solvent and/or directly bonded together not via the polar solvent, said structure being obtained by using a raw material-containing material comprising the constituent atoms, and the polar solvent.
4. The method for producing a solid electrolyte as set forth in any one of items 1 to 3 above, wherein the polar solvent contains at least one type of atoms selected from nitrogen atoms, oxygen atoms and halogen atoms.
5. The method for producing a solid electrolyte as set forth in any one of items 1 to 4 above, wherein the polar solvent has an amino group.
6. The method for producing a solid electrolyte as set forth in any one of items 1 to 5 above, wherein the polar solvent has two tertiary amino groups.
7. The method for producing a solid electrolyte as set forth in any one of items 1 to 6 above, wherein the slurry further includes another solvent.
8. The method for producing a solid electrolyte as set forth in any one of items 1 to 7 above, wherein the content of the polar solvent in the slurry before drying is 5% by mass or more.
9. The method for producing a solid electrolyte as set forth in any one of items 1 to 8 above, wherein the fluidized drying is performed using a medium fluidized bed dryer having a mechanism for fluidizing the media particles with a gas.
10. The method for producing a solid electrolyte as set forth in any one of items 1 to 9 above, wherein the media particles are ceramic particles.
11. The method for producing a solid electrolyte as set forth in item 9 or 10 above, wherein the gas is an inert gas.
12. The method for producing a solid electrolyte as set forth in any one of items 9 to 11 above, wherein the gas has been heated.
13. The method for producing a solid electrolyte as set forth in any one of items 1 to 12 above, wherein the drying is performed in a circulating manner.
14. The method for producing a solid electrolyte as set forth in any one of items 1 to 13 above, wherein powder obtained by the drying is collected in a bag filter.
15. The method for producing a solid electrolyte as set forth in item 14 above, wherein a filter of the bag filter is made of polytetrafluoroethylene. Advantageous Effects of Invention

The present invention makes it possible to provide a production method which can provide a solid electrolyte having a high ion conductivity with high productivity using a liquid-phase method.

Brief Description of Drawings

FIG. 1 is a flow diagram illustrating an exemplary dryer for use in a production method according to an embodiment of the present invention.
FIG. 2 shows X-ray diffraction spectra of the electrolyte precursor, the amorphous solid electrolyte, and the crystalline solid electrolyte obtained in Example 1.
FIG. 3 shows X-ray diffraction spectra of the raw materials used in Examples.
FIG. 4 is a flow diagram of the spray dryer used in Comparative Example 2.

Description of Embodiments

An embodiment of the present invention (hereinafter sometimes referred to as "this embodiment") will now be described. With reference to numerical ranges as defined herein by "or more", "or less" or "X to Y", the upper limit values and the lower limit values can be combined arbitrarily. Further, a numerical value in Examples can be used as an upper limit value or a lower limit value.

[Solid Electrolyte Production Method]

The solid electrolyte production method of this embodiment comprises drying a slurry by fluidized drying using media particles as a medium, the slurry including a solid electrolyte comprising at least an alkali metal, sulfur atoms and phosphorus atoms as constituent atoms, or a precursor of the solid electrolyte, and a polar solvent.
As used herein, the term "solid electrolyte" refers to an electrolyte which keeps its solid state at 25°C in a nitrogen atmosphere. The solid electrolyte in this embodiment is a solid electrolyte comprising lithium atoms, sulfur atoms, phosphorus atoms, and halogen atoms, and having an ion conductivity attributable to the lithium atoms.
The "solid electrolyte" includes both a crystalline solid electrolyte having a crystal structure and an amorphous solid electrolyte. The crystalline solid electrolyte herein refers to a solid electrolyte which, in an X-ray diffraction pattern obtained from its X-ray diffraction measurement, has peaks derived from the solid electrolyte, and which may or may not have peaks derived from raw materials for the solid electrolyte. Thus, the crystalline solid electrolyte comprises a crystal structure derived from the solid electrolyte. The crystal structure may be either partly or wholly derived from the solid electrolyte. The crystalline solid electrolyte may partly comprise an amorphous solid electrolyte as long as it has the above-described X-ray diffraction pattern. Thus, the crystalline solid electrolyte includes a so-called glass ceramics which is obtained by heating an amorphous solid electrolyte to the crystallization temperature or higher.
The amorphous solid electrolyte, as used herein, refers to a solid electrolyte whose X-ray diffraction pattern, obtained from its X-ray diffraction measurement, is a halo pattern in which there is substantially no peak other than peaks derived from the material, and in which peaks derived from raw materials for the solid electrolyte may or may not be present.

[Slurry]

In the production method of this embodiment, the object to be dried is a slurry including a solid electrolyte comprising at least an alkali metal, sulfur atoms and phosphorus atoms as constituent atoms, or a precursor of the solid electrolyte (hereinafter also referred to as an "electrolyte precursor"), and a polar solvent. The slurry can be obtained, for example, by allowing a raw material-containing material, which comprises at least one type of atoms selected from an alkali metal, sulfur atoms and phosphorus atoms as constituent atoms, to react in the polar solvent while, for example, mixing the mixture. The following is a typical preferred example of a method for obtaining the slurry.

(Raw Material-Containing Material)

The raw material-containing material, which is used to obtain the slurry, preferably comprises lithium atoms, sulfur atoms and phosphorus atoms from the viewpoint of obtaining a solid electrolyte comprising an alkali metal, sulfur atoms and phosphorus atoms, and preferably further comprises halogen atoms because the solid electrolyte preferably contains halogen atoms from the viewpoint of enhancing the ion conductivity.

A compound comprising at least one selected from lithium atoms, sulfur atoms and phosphorus atoms, for example, can be used as the raw material-containing material. Either a single compound or a combination of two or more such compounds may be used as the raw material-containing material. Such a compound preferably further comprises halogen atoms. Thus, a single compound comprising at least one selected from lithium atoms, sulfur atoms, phosphorus atoms and halogen atoms, or a combination of two or more such compounds can be used as the raw material-containing material.

Such a compound includes a raw material composed of at least two types of atoms selected from the above-described four types of atoms. Examples of the raw material include lithium sulfide; lithium halides such as lithium fluoride, lithium chloride, lithium bromide, and lithium iodide; phosphorus sulfides such as diphosphorus trisulfide ($P_2S_3$) and diphosphorus pentasulfide ($P_2S_5$); phosphorus halides such as various phosphorus fluorides ($PF_3$, $PF_5$), various phosphorus chlorides ($PCl_3$, $PCl_5$, $P_2Cl_4$), various phosphorus bromides ($PBrs$, $PBr_5$), and various phosphorus iodides ($PI_3$, $P_2I_4$); and thiophosphoryl halides such as thiophosphoryl fluoride ($PSF_3$), thiophosphoryl chloride ($PSCl_3$), thio-phosphoryl bromide ($PSBr_3$), thiophosphoryl iodide ($PSI_3$), thiophosphoryl dichlorofluoride ($PSCl_2F$), and thiophosphoryl dibromofluoride ($PSBr_2F$). The raw material-containing material also includes a simple halogen, such as fluorine ($F_2$), chlorine ($Cl_2$), bromine ($Br_2$), or iodine ($I_2$). Bromine ($Br_2$) and iodine ($I_2$) are preferred.

Usable raw materials other than those described above include raw materials comprising at least one selected from the alkali metal, sulfur atoms and phosphorus atoms, and preferably also halogen atoms, and further comprising other atoms. Specific examples of such raw materials include lithium compounds such as lithium oxide, lithium hydroxide, and lithium carbonate; alkali metal sulfides such as sodium sulfide, potassium sulfide, rubidium sulfide, and cesium sulfide; metal sulfides such as silicon sulfide, germanium sulfide, boron sulfide, gallium sulfide, tin sulfide ($SnS$, $SnS_2$), aluminum sulfide, and zinc sulfide; phosphoric acid compounds such as sodium phosphate and lithium phosphate; halides of an alkali metal other than lithium, e.g. sodium halides such as sodium iodide, sodium fluoride, sodium chloride, and sodium bromide; metal halides such as an aluminum halide, a silicon halide, a germanium halide, an arsenic halide, a selenium halide, a tin halogen, an antimony halide, a tellurium halide, and a bismuth halide; and phosphorus oxyhalides such as phosphorus oxychloride ($POCl_3$) and phosphorus oxybromide ($POBr_3$).

In this embodiment, among the above-described raw materials, phosphorus sulfides such as lithium sulfide, diphosphorus trifluoride ($P_2S_3$), and diphosphorus pentasulfide ($P_2S_5$); simple halogens such as fluorine ($F_2$), chlorine ($Cl_2$), bromine ($Br_2$), and iodine ($I_2$); and lithium halides such as lithium fluoride, lithium chloride, lithium bromide, and lithium iodide are preferred from the viewpoint of more easily obtaining a solid electrolyte having a high ion conductivity. Examples of a preferred combination of raw materials include a combination of lithium sulfide, diphosphorus pentasulfide, and a lithium halide, and a combination of lithium sulfide, diphosphorus pentasulfide, and a simple halogen. The lithium halide is preferably lithium bromide or lithium iodide, and the simple halogen is preferably bromine or iodine.

In this embodiment, it is also possible to use a solid electrolyte comprising a $PS_4$ structure or the like, such as $Li_3PS_4$, as a raw material. Thus, a lithium-containing structure such as $Li_3PS_4$, which is present as a main structure in the solid electrolyte obtained by the production method of this embodiment, is used as a raw material. This makes it possible to increase the component ratio of the structure, thereby increasing the ion conductivity as compared to the case of using the above-described raw material-containing material such as lithium sulfide, and synthesizing an electrolyte precursor through a reaction between raw materials.

By producing or otherwise preparing a solid electrolyte comprising the above structure, and using it as a raw material, an electrolyte precursor in which the structure is bonded (coordinated) to a halogen atom-containing raw material such as a simple halogen or a lithium halide via a polar solvent, and in which halogen atoms are dispersed and fixed is more likely to be obtained. Accordingly, a solid electrolyte having a high ion conductivity can be obtained.

An amorphous solid electrolyte having an $Li_3PS_4$ structure as a molecular structure (also referred to as "amorphous $Li_3PS_4$") or a crystalline solid electrolyte having an $Li_3PS_4$ structure as a molecular structure (also referred to as "crystalline $Li_3PS_4$") is an exemplary solid electrolyte for use as the raw material-containing material in this embodiment. In view of ion conductivity, prevention of the generation of hydrogen sulfide, etc., such an amorphous or crystalline solid electrolyte preferably comprises no $Li_4P_2S_7$ structure. Such a solid electrolyte may be one produced by a conventional existing method such as a mechanical milling method, a slurry method, or a melt quenching method, or may be a commercially available product.

Such a solid electrolyte is preferably an amorphous solid electrolyte. The dispersibility of halogen atoms in the electrolyte precursor is higher, and the halogen atoms are more easily bonded to lithium atoms, sulfur atoms and phosphorus atoms in the solid electrolyte. Accordingly, a solid electrolyte having a higher ion conductivity can be obtained.

The content of the amorphous solid electrolyte having an $Li_3PS_4$ structure or the like is preferably 60 to 100 mol %, more preferably 65 to 90 mol %, and even more preferably 70 to 80 mol % based on the total amount of the raw material-containing material.

When the solid electrolyte having an $Li_3PS_4$ structure or the like and a simple halogen are used, the content of the simple halogen is preferably 1 to 50 mol %, more preferably 2 to 40 mol %, even more preferably 3 to 25 mol %, and still more preferably 3 to 15 mol % based on the amount of the amorphous solid electrolyte having an $Li_3PS_4$ structure or the like.

When lithium sulfide is used as an alkali metal-containing compound in this embodiment, it preferably has a particulate form.

The average particle diameter ($D_{50}$) of lithium sulfide particles is preferably 0.1 $\mu$m or more and 1000 $\mu$m or less, more preferably 0.5 $\mu$m or more and 100 $\mu$m or less, and even more preferably 1 $\mu$m or more and 20 $\mu$m or less. As used herein, the average particle diameter ($D_{50}$) refers to a particle diameter at a 50% integrated value of the total, as calculated sequentially from a particle having the minimum particle diameter, in a particle size distribution cumulative curve. The volumetric distribution is an average particle diameter measurable, for example, by using a laser diffraction/scattering particle size analyzer. Among the above-described raw materials, the solid raw materials preferably have an average particle diameter comparable to the above-described lithium sulfide particles, i.e. an average particle diameter that falls within the above-described range of the average particle diameter of lithium sulfide particles.

When lithium sulfide, diphosphorus pentasulfide and a lithium halide are used as raw materials, the proportion of lithium sulfide to the total amount of lithium sulfide and diphosphorus pentasulfide is preferably 70 to 80 mol %, more preferably 72 to 78 mol %, and even more preferably 74 to 76 mol% from the viewpoint of obtaining higher chemical stability and a higher ion conductivity.

When lithium sulfide, diphosphorus pentasulfide, a lithium halide and an optional other raw material(s) are used, the content of lithium sulfide and diphosphorus pentasulfide is preferably 60 to 100 mol %, more preferably 65 to 90 mol %, and even more preferably 70 to 80 mol % based on the total amount of the raw materials.

When a combination of lithium bromide and lithium iodide is used as a lithium halide, the proportion of lithium bromide to the total amount of lithium bromide and lithium iodide is preferably 1 to 99 mol %, more preferably 20 to 90 mol %, even more preferably 40 to 80 mol %, and especially preferably 50 to 70 mol % from the viewpoint of increasing the ion conductivity.

When a simple halogen, lithium sulfide and diphosphorus pentasulfide are used as raw materials, the proportion of the number of moles of lithium sulfide, excluding lithium sulfide of the same number of moles as that of the simple halogen, to the total number of moles of lithium sulfide, excluding lithium sulfide of the same number of moles as that of the simple halogen, and diphosphorus pentasulfide is preferably within the range of 60 to 90%, more preferably within the range of 65 to 85%, even more preferably within the range of 68 to 82%, and still more preferably within the range of 72 to 78%, and especially preferably within the range of 73 to 77%. This is because, when the proportion is within the above range, a higher ion conductivity can be obtained. From the same viewpoint, when lithium sulfide, diphosphorus pentasulfide and a simple halogen are used, the content of the simple halogen based on the total amount of lithium sulfide, diphosphorus pentasulfide and the simple halogen is preferably 1 to 50 mol %, more preferably 2 to 40 mol %, even more preferably 3 to 25 mol %, and still more preferably 3 to 15 mol %.

When lithium sulfide, diphosphorus pentasulfide, a simple halogen and a lithium halide are used, the content ($\alpha$ mol %) of the simple halogen and the content ($\beta$ mol %) of the lithium halide based on the total amount of the raw materials preferably satisfy the following expression (2), more preferably satisfy the following expression (3), even more preferably satisfy the following expression (4), and still more preferably satisfy the following expression (5).

$$2 \leq 2\alpha + \beta \leq 100 \qquad (2)$$

$$4 \leq 2\alpha + \beta \leq 80 \qquad (3)$$

$$6 \leq 2\alpha + \beta \leq 50 \qquad (4)$$

$$6 \leq 2\alpha + \beta \leq 30 \qquad (5)$$

When two types of simple halogens are used, the ratio between the number of moles (A1) of one type of halogen atoms and the number of moles (A2) of the other type of halogen atoms in the material, A1:A2, is preferably 1-99:99-1, more preferably 10:90-90:10, even more preferably 20:80-80:20, and still more preferably 30:70-70:30.

When the two types of simple halogens are bromine and iodine, the ratio between the number of moles (B1) of bromine and the number of moles (B2) of iodine, B1:B2, is preferably 1-99:99-1, more preferably 15:85-90:10, even more preferably 20:80-80:20, still more preferably 30:70-75:25. and especially preferably 35:65-75:25.

(Polar Solvent)

In the production method of this embodiment, the slurry includes a polar solvent. Thus, a polar solvent is used to obtain the slurry. As used herein, the term "polar solvent" refers to a substance capable of forming a complex with a lithium atom, and having the property of interacting with a lithium atom-containing sulfide or halide, contained in the above-described raw material, to promote the formation of an electrolyte precursor.

Any polar solvent can be used without any particular limitation as long as it has the above property. In particular, it is preferred to use a compound containing a heteroatom having a high affinity for a lithium atom, for example, a nitrogen atom, an oxygen atom or a halogen atom such as a chlorine atom, more preferably a compound having a heteroatom-containing group. This is because a heteroatom or the heteroatom-containing group is capable of being coordinated (bonded) to lithium.

It is considered that a heteroatom in the molecule of a polar solvent has a high affinity for a lithium atom, and is easily bonded to a lithium-containing structure typically including a $PS_4$ structure, such as $Li_3PS_4$, which is present as a main structure in the solid electrolyte obtained by the production method of this embodiment, or to a lithium-containing raw material such as a lithium halide to form an aggregate. Therefore, by mixing the above-described raw material-containing material and a polar solvent, a lithium-containing structure such as a $PS_4$ structure or an aggregate bound with the polar solvent, a lithium-containing raw material such as a lithium halide or an aggregate bound with the polar solvent is present throughout the polar solvent. This makes it possible to obtain an electrolyte precursor in which halogen atoms are more dispersed and fixed, thus making it possible to obtain a solid electrolyte having a higher ion conductivity.

Therefore, the polar solvent preferably has in the molecule at least two heteroatoms capable of coordinating (bonding), more preferably at least two heteroatom-containing groups. When the polar solvent has at least two heteroatom-containing groups in the molecule, the polar solvent can bond a lithium-containing structure including a $PS_4$ structure, such as $Li_3PS_4$, to a lithium-containing raw material such as a lithium halide via the at least two heteroatoms in the molecule. Halogen atoms are more dispersed and fixed through such bonding in an electrolyte precursor, leading to a solid electrolyte having a higher ion conductivity. A nitrogen atom is preferred as a heteroatom, and an amino group is preferred as a nitrogen atom-containing group. Thus, an amine compound is preferred as a polar solvent.

The amine compound is, for example, an aliphatic amine, an alicyclic amine, a heterocyclic amine, or an aromatic amine. Either a single compound or a combination of two or more compounds may be used as the amine compound.

Examples of typical preferable aliphatic amines include aliphatic primary diamines such as ethylenediamine, diaminopropane, and diaminobutane; aliphatic secondary diamines such as N,N'-dimethylethylenediamine, N,N'-diethylethylenediamine, N,N'-dimethyldiaminopropane, and N,N'-diethyldiaminopropane; and aliphatic tertiary diamines such as N,N,N',N'-tetramethyldiaminomethane, N,N,N',N'-tetramethylethylenediamine, N,N,N',N'-tetraethylethylenediamine, N,N,N',N'-tetramethyldiaminopropane, N,N,N',N'-tetraethyldiaminopropane, N,N,N',N'-tetramethyldiaminobutane, N,N,N',N'-tetramethyldiaminopentane, and N,N,N',N'-tetramethyldiaminohexane. Specific compounds as described herein may each include all isomers unless otherwise noted. Thus, in the case of diaminobutane, it includes isomers in terms of the positions of the amino groups, such as 1,2-diaminobutane, 1,3-diaminobutane and 1,4-diaminobutane, and also includes linear and branched isomers in terms of butane.

The number of carbon atoms in such an aliphatic amine is preferably 2 or more, more preferably 4 or more, and even more preferably 6 or more, while the upper limit is preferably 10 or less, more preferably 8 or less, and even more preferably 7 or less. The number of carbon atoms in the aliphatic hydrocarbon group of an aliphatic amine is preferably 2 or more, while the upper limit is preferably 6 or less, more preferably 4 or less, and even more preferably 3 or less.

Examples of typical preferable alicyclic amines include alicyclic primary diamines such as cyclopropanediamine and cyclohexanediamine; alicyclic secondary diamines such as bisaminomethylcyclohexane; and alicyclic tertiary diamines such as N,N,N',N'-tetramethyl-cyclohexanediamine and bis(ethylmethylamino)cyclohexane. Examples of typical preferable heterocyclic amines include heterocyclic primary diamines such as isophoronediamine; heterocyclic secondary diamines such as piperazine and dipiperidylpropane; and heterocyclic tertiary diamines such as N,N-dimethylpiperazine and bismethylpiperidylpropane.

The number of carbon atoms in such an alicyclic amine or a heterocyclic amine is preferably 3 or more, more preferably 4 or more, while the upper limit is preferably 16 or less, more preferably 14 or less.

Examples of typical preferable aromatic amines include aromatic primary diamines such as phenyldiamine, tolylenediamine and naphthalenediamine; aromatic secondary diamines such as N-methylphenylenediamine, N,N'-dimethylphenylenediamine, N,N'-bismethylphenylphenylenediamine, N,N'-dimethylnaphthalenediamine and N-naphthylethylenediamine; and aromatic tertiary diamines such as N,N-dimethylphenylenediamine, N,N,N',N'-tetramethylphenylenediamine, N,N,N',N'-tetramethyldiaminodiphenylmethane, and N,N,N',N'-tetramethylnaphthalenediamine.

The number of carbon atoms in such an aromatic amine is preferably 6 or more, more preferably 7 or more, and even more preferably 8 or more, while the upper limit is preferably 16 or less, more preferably 14 or less, and even more preferably 12 or less.

The amine compound for use in this embodiment may be one substituted with a substituent such as an alkyl group, an alkenyl group, an alkoxy group, a hydroxy group, or a cyano group, or with a halogen atom.

While diamines have been described as specific examples, amine compounds usable in this embodiment are, of course, not limited to diamines. Examples of other usable amine compounds include trimethylamine, triethylamine, ethyldimethylamine, and aliphatic monoamines corresponding to various diamines such as the above-described aliphatic diamines; piperidine compounds such as piperidine, methylpiperidine, and tetramethylpiperidine; pyridine compounds such as pyridine and picoline; morpholine compounds such as morpholine, methylmorpholine, and thiomorpholine; imidazole compounds such as imidazole and methylimidazole; alicyclic monoamines such as monoamines corresponding to the above-described alicyclic diamines; heterocyclic monoamines corresponding to the above-described heterocyclic diamines; and monoamines such as aromatic monoamines corresponding to the above-described aromatic diamines. Furthermore, it is also possible to use polyamines having three or more amino groups, such as diethylenetriamine, N,N',N''-trimethyldiethylenetriamine, N,N,N',N'',N''-pentamethyldiethylenetriamine, triethylenetetramine, N,N'-bis[(dimethylamino)ethyl]-N,N'-dimethylethylenediamine, hexamethylenetetramine, and tetraethylenepentamine.

Among the above-described amine compounds, tertiary amines having a tertiary amino group are preferred, tertiary diamines having two tertiary amino groups are more preferred, tertiary diamines having two tertiary amino groups at both ends of the molecule are even more preferred, and aliphatic tertiary diamines having tertiary amino groups at both ends of the molecule are still more preferred from the viewpoint of obtaining a higher ion conductivity. In terms of the amine compounds, tetramethylethylenediamine, tetraethylethylenediamine, tetramethyldiamino- propane, and tetraethyldiaminopropane are preferred as the aliphatic tertiary diamines having tertiary amino groups at both ends of the molecule. In view also of easiness of availability, etc., tetramethylethylenediamine and tetramethyldiaminopropane are preferred.

Usable polar solvents other than amine compounds include compounds containing a heteroatom such as an oxygen atom or a halogen atom, e.g., a chlorine atom, and having a high affinity for a lithium atom. Compounds having a group, other than an amino group, containing a nitrogen atom as a heteroatom, such as a nitro group or an amido group, can achieve the same effect. It is to be noted that in the production method of this embodiment, such a polar solvent other than an amine compound can function as a polar solvent when it is used alone. When the polar solvent is used in combination with an amine compound, the amine compound predominantly performs the above-described function as a polar solvent; the polar solvent dose not substantially perform a function as a polar solvent, and can perform a function as the below-described solvent.

Examples of the other polar solvents include alcohol solvents such as ethanol and butanol; ester solvents such as ethyl acetate and butyl acetate; aldehyde solvents such as formaldehyde, acetaldehyde and dimethylformamide; ketone solvents such as acetone and methyl ethyl ketone; ether solvents such as diethyl ether, diisopropyl ether, dibutyl ether, tetrahydrofuran, dimethoxyethane, cyclopentyl methyl ether, tert-butyl methyl ether, and anisole; halogen atom-containing aromatic hydrocarbon solvents such as trifluoromethylbenzene, nitrobenzene, chlorobenzene, chlorotoluene, and bromobenzene; and solvents containing carbon atoms and heteroatoms, such as acetonitrile, dimethyl sulfoxide, and carbon disulfide. Among them, ether solvents are preferred, diethyl ether, diisopropyl ether, dibutyl ether and tetrahydrofuran are more preferred, and diethyl ether, diisopropyl ether and dibutyl ether are even more preferred.

In this embodiment, the content of the amine compound in the polar solvent is preferably as high as possible. In particular, the content is preferably 60% by mass or more, more preferably 80% by mass or more, even more preferably 90% by mass or more, still more preferably 95% by mass or more, and especially preferably 100% by mass, that is, the polar solvent is composed solely of the amine compound.

(Other Solvent)

In this embodiment, it is possible to use another solvent in addition to the above-described polar solvent. Thus, the slurry can include a mixed solvent consisting of the polar solvent and the other solvent. The use of another solvent in mixing the raw material-containing material and the polar solvent can enhance the above-described effect of the use of the polar solvent, namely the formation of an electrolyte precursor through the interaction of the polar solvent with lithium atoms, sulfur atoms and phosphorus atoms, and preferably further with halogen atoms. Therefore, a lithium-containing structure such as a $PS_4$ structure or an aggregate bound with the polar solvent, and a lithium-containing raw material such as a lithium halide or an aggregate bound with the polar solvent are more likely to be present throughout the polar solvent. This makes it possible to obtain an electrolyte precursor in which halogen atoms are more dispersed and fixed, thus making it possible to obtain a solid electrolyte having a higher ion conductivity.

The production method of this embodiment, which uses the slurry, is a so-called heterogeneous method; the electrolyte precursor is preferably not completely dissolved but precipitated in the polar solvent in a liquid form. The use of a solvent in addition to the polar solvent can adjust the solubility of the electrolyte precursor. In particular, the use of an additional solvent can reduce the dissolution of halogen atoms, which are likely to be dissolved out of the electrolyte precursor, thereby obtaining the intended electrolyte precursor. This makes it possible to produce a crystalline sold electrolyte having a high ion conductivity via the formation of the electrolyte precursor in which the components, such as a halogen, are dispersed.

Solvents which have heretofore been used in the production of a solid electrolyte can be used widely as the other solvent to be used in combination with the polar solvent. Examples of such other solvents include hydrocarbon solvents such as aliphatic hydrocarbon solvents, alicyclic hydrocarbon solvents, and aromatic hydrocarbon solvents; and carbon atom-containing solvents such as alcohol solvents, ester solvents, aldehyde solvents, ketone solvents, ether solvents, and solvents containing carbon atoms and heteroatoms. Non-polar ones of these solvents may be used. Alternatively, it is possible to select a solvent from the below-listed solvents.

Specific example of such other solvents include aliphatic hydrocarbon solvents such as hexane, pentane, 2-ethylhexane, heptane, octane, decane, undecane, dodecane, and tridecane; alicyclic hydrocarbon solvents such as cyclohexane and methylcyclohexane; aromatic hydrocarbon solvents such as benzene, toluene, xylene, mesitylene, ethylbenzene, tert-butylbenzene, trifluoromethylbenzene, nitrobenzene, chlorobenzene, chlorotoluene, and bromobenzene; alcohol solvents such as ethanol and butanol; ester solvents such as ethyl acetate and butyl acetate; aldehyde solvents such as formaldehyde, acetaldehyde, and dimethylformamide; ketone solvents such as acetone and methyl ethyl ketone; ether solvents such as diethyl ether, diisopropyl ether, dibutyl ether, tetrahydrofuran, dimethoxyethane, cyclopentyl methyl ether, tert-butyl methyl ether, and anisole; and solvents containing carbon atoms and heteroatoms such as acetonitrile, dimethylsulfoxide, and carbon disulfide.

Among these solvents, aliphatic hydrocarbon solvents, alicyclic hydrocarbon solvents, aromatic hydrocarbon solvents, and ether solvents are preferred and, from the viewpoint of obtaining a high ion conductivity more stably, heptane, cyclohexane, toluene, ethylbenzene, diethyl ether, diisopropyl ether, dibutyl ether, dimethoxyethane, cyclopentyl methyl ether, tert-butyl methyl ether, and anisole are more preferred, diethyl ether, diisopropyl ether, and dibutyl ether are even more preferred, diisopropyl ether and dibutyl ether are still more preferred, and dibutyl ether is especially preferred. In this embodiment, these solvents may be used singly or in a combination of two or more.

Some of these solvents, for example an ether solvent having a heteroatom, can be used also as the polar solvent. As described above, when an amine compound is used as the polar solvent, the amine compound predominantly performs the above-described function as a polar solvent; the ether solvent dose not substantially perform a function as a polar solvent, and can perform a function as a solvent. Thus, the ether solvents, described above as the other solvent, can function as a solvent when an amine compound is used as the polar solvent, while they can function as a polar solvent when no amine compound is used as the polar solvent. For that reason, the ether solvent is herein described also as the polar solvent.

Therefore, when an amine compound and an ether solvent are used together, the amino compound may be treated as the polar solvent, and the ether solvent as the other solvent. The same holds true for the solvents described above as the other solvent not limited to the ether solvent.

When a solvent is used, the content of the polar solvent is preferably 10% by mass or more, more preferably 15% by mass or more, and even more preferably 20% by mass or more based on the total amount of the polar solvent and the solvent, while the upper limit is preferably 65% by mass or less, more preferably 60% by mass or less, and even more preferably 55% by mass or less.

(Mixing)

The polar solvent is a liquid, and the raw material-containing material includes a solid. Accordingly, mixing of the raw material-containing material in the polar solvent is generally performed in a system in which the solid raw material-containing material is present in the liquid polar solvent.

The content of the raw material-containing material is preferably 5 g or more, more preferably 10 g or more, even more preferably 30 g or more, and still more preferably 50 g or more per 1 L of the polar solvent, while the upper limit is preferably 500 g or less, more preferably 400 g or less, even more preferably 300 g or less, and still more preferably 250 g of less. When the content of the raw material-containing material is within the above range, the raw material-containing material is readily mixed, whereby the state of dispersion of raw materials is enhanced, and a reaction between the raw materials is promoted. This enables efficient production of an electrolyte precursor, and thus a solid electrolyte. When the above-described other solvent is used, the total amount of the polar solvent and the other solvent is made to fall within the above range.

There is no particular limitation on a method for mixing the raw material-containing material and the polar solvent; raw materials contained in the raw material-containing material and the polar solvent may be placed in an apparatus that can mix the raw material-containing material and the polar solvent and mixed. For example, after feeding the polar solvent into a tank and actuating a stirring blade, the raw materials are gradually added while stirring and mixing the materials and the solvent. Such a mixing method is desirable because a good mixing state of the raw material-containing material can be obtained and good dispersion of the raw materials can be achieved.

When a simple halogen is used as a raw material, the raw material may not be a solid. For example, fluorine and chlorine are a gas, and bromine is a liquid at normal temperature and pressure. In the case of a liquid raw material, it may be fed into the tank together with the polar solvent and separately from other solid raw material(s). In the case of a gaseous raw material, it may be blown into the polar solvent with a solid raw material(s) added.

In this embodiment, the raw material-containing material and the polar solvent only need to be mixed, and it is not necessary to use a device, generally called a pulverizer, which is used for the purpose of pulverizing a solid material, e.g. a medium-type pulverizer such as a ball mill or a bead mill. In this embodiment, raw materials contained in the raw material-containing material and the polar solvent can be mixed, and the electrolyte precursor can be formed by merely mixing the raw material-containing material and the polar solvent. A mixture of the raw material-containing material and the polar solvent may be pulverized by using a pulverizer because the mixing time for obtaining the electrolyte precursor can be shortened, and fine powder can be obtained.

A mechanical stirring mixer, capable of mixing by stirring (stirring/mixing) by means of a stirring blade provided in a tank, can be used as an apparatus for mixing the raw material-containing material and the polar solvent. The mechanical stirring mixer includes a high-speed stirring mixer and a double-arm mixer. A high-speed stirring mixer is preferred from the viewpoint of increasing the homogeneity of raw materials in the mixture of the raw material-containing material and the polar solvent, and obtaining a higher ion conductivity. The high-speed stirring mixer includes a vertical shaft rotating mixer and a horizontal shaft rotating mixer. Either type of mixer may be used.

Examples of the shape of the stirring blade used in the mechanical stirring mixer include a blade shape, an arm shape, an anchor shape, a ribbon shape, a multistage blade shape, a double-arm shape, a shovel shape, a twin-blade shape, a flat blade shape, and a C-shaped blade shape. A shovel shape, a flat blade shape and a C-shaped blade shape are preferred from the viewpoint of enhancing the homogeneity of raw material in the raw material-containing material and obtaining a higher ion conductivity.

There is no particular limitation on temperature conditions upon mixing of the raw material-containing material and the polar solvent. The temperature is, for example, -30 to 100°C, preferably -10 to 50°C, and more preferably around room temperature (23°C) (e.g., room temperature $\pm$ about 5°C). The mixing time is about 0.1 to 150 hours and, from the viewpoint of performing more homogeneous mixing and obtaining a higher ion conductivity, the mixing time is preferably 1 to 120 hours, more preferably 4 to 100 hours, and even more preferably 8 to 80 hours.

By mixing the raw material-containing material and the polar solvent, through the interaction of the polar solvent with lithium atoms, sulfur atoms and phosphorus atoms, contained in the raw materials, and preferably further with halogen atoms, an electrolyte precursor in which these atoms are bonded together via the polar solvent and/or directly bonded together not via the polar solvent is obtained. Thus, in the solid electrolyte production method of this embodiment, the electrolyte precursor, obtained by mixing of the raw material-containing material and the polar solvent, is composed of the polar solvent, lithium atoms, sulfur atoms and phosphorus atoms, and preferably also of halogen atoms. By mixing the raw material-containing material and the polar solvent, a material containing the electrolyte precursor (hereinafter sometimes referred to as an "electrolyte precursor-containing material") is obtained. In this embodiment, the resulting electrolyte precursor is not completely dissolved in the polar solvent which is a liquid; a slurry (also referred to as a "suspension") containing the electrolyte precursor which is a solid is generally obtained. The use of the slurry in the present production method of this embodiment indicates that the present system corresponds to a heterogeneous system in a so-called liquid-phase method.

(Pulverization)

In preparing the slurry in this embodiment, the electrolyte precursor may be pulverized. By pulverizing the electrolyte precursor, a solid electrolyte having a small particle diameter can be obtained while preventing a reduction in the ion conductivity.

Unlike mechanical milling in a so-called solid-phase method, the pulverization of the electrolyte precursor is not for obtaining an amorphous or crystalline solid electrolyte by a mechanical stress. As described above, the electrolyte precursor contains the polar solvent, and a lithium-containing structure such as a $PS_4$ structure, and a lithium-containing raw material such as a lithium halide are bonded (coordinated) to each other via the polar solvent. It is considered that when the electrolyte precursor is pulverized, fine particles of the electrolyte precursor can be obtained while maintaining the above-described bond (coordination) and dispersion. By subjecting this electrolyte precursor to the below-described drying, and further to heating, the components bonded (coordinated) together via the polar solvent bind together upon removal of the polar solvent, and a reaction to form a crystalline solid electrolyte easily occurs. For that reason, the growth of large particles due to aggregation of particles, which may occur in the usual synthesis of a solid electrolyte, is unlikely to occur. This enables easy production of fine particles.

The particle diameter of the solid electrolyte is preferably as small as possible from the viewpoint of the performance, the production, etc. of an all-solid-state battery; however, it is not easy to pulverize the solid electrolyte into fine particles using a bead mill or the like. The particle size reduction can be achieved to some extent by wet pulverization using a solvent. However, the solvent is likely to deteriorate the solid electrolyte. In addition, aggregation of particles is likely to occur during pulverization, causing the problem of an excessive load on pulverization. On the other hand, it is difficult to pulverize the solid electrolyte into submicron particles by dry pulverization using no solvent. Under such circumstances, it is a great advantage to be able to enhance the performance of an all-solid-state battery and to increase the production efficiency by the simple process of pulverizing the electrolyte precursor.

Further, owing to mixing upon pulverization (also referred to as pulverization mixing), a lithium-containing structure such as a $PS_4$ structure or an aggregate bound with the polar solvent, a lithium-containing raw material such as a lithium halide or an aggregate bound with the polar solvent is more likely to be present throughout the polar solvent. This makes it possible to obtain an electrolyte precursor in which halogen atoms are more dispersed and fixed, thus making it possible to obtain a solid electrolyte having a higher ion conductivity.

There is no particular limitation on a pulverizer for use in the pulverization of the electrolyte precursor so long as it can pulverize particles of the precursor. For example, a medium-type pulverizer using a pulverization medium can be used. Among medium-type pulverizers, a wet pulverizer which can perform wet pulverization is preferred considering that the electrolyte precursor is in the form of a liquid or slurry mainly composed of a liquid such as the polar solvent or a solvent. Such a pulverizer, besides pulverization, substantially also performs mixing, i.e. performs pulverization mixing.

Typical examples of the wet pulverizer include a wet bead mill, a wet ball mill, and a wet vibration mill. A wet bead mill using beads as a pulverization medium is preferred in that it can freely adjust pulverization conditions and can deal with smaller-sized particles. A dry pulverizer, for example a dry medium-type pulverizer such as a dry bead mill, a dry ball mill, or a dry vibration mill, or a dry non-medium pulverizer such as a jet mill can also be used.

The electrolyte precursor to be pulverized in a pulverizer is generally supplied as an electrolyte precursor-containing material obtained by mixing the raw material-containing material and the polar solvent, and is supplied mainly in a slurry form. Thus, the object to be pulverized in a pulverizer is mainly an electrolyte precursor-containing slurry. Accordingly, a pulverizer for use in this embodiment is preferably a flow pulverizer capable of circulation operation circulating an electrolyte precursor-containing slurry as needed. More specifically, it is preferred to use an apparatus configured to circulate a slurry between a pulverizer (pulverizing mixer) for pulverizing the slurry and a constant-temperature tank (reactor), as disclosed in JP No. 2010-140893A.

The size of beads for use in the pulverizer may be appropriately selected depending on the intended particle diameter, the intended processing amount, etc., and is, for example, about 0.05φ mm or more and about 5.0 mmφ or less, preferably 0.1 mmφ or more and 3.0 mmφ or less, more preferably 0.3 mmφ or more and 1.5 mmφ or less in terms of the diameter of beads.

A machine capable of pulverizing an object by using ultrasonic waves, for example a machine called an ultrasonic pulverizer, an ultrasonic homogenizer, a probe ultrasonic pulverizer, or the like, can be used as a pulverizer for pulverizing the electrolyte precursor.

In this case, conditions, including the frequency of ultrasonic waves, may be appropriately selected depending on the intended average particle diameter of the electrolyte precursor, etc. The frequency is, for example, about 1 kHz or more and about 100 kHz or less and, from the viewpoint of more efficiently pulverizing the electrolyte precursor, it is preferably 3 kHz or more and 50 kHz or less, more preferably 5 kHz or more and 40 kHz or less, and even more preferably 10 kHz or more and 30 kHz or less.

The power of such an ultrasonic pulverizer may be generally about 500 to about 16,000 W, preferably 600 to 10,000 W, more preferably 750 to 5,000 W, and even more preferably 900 to 1,500 W.

While the average particle diameter ($D_{50}$) of the electrolyte precursor, obtained by pulverization, may be appropriately determined as desired, it is generally 0.01 μm or more and 50 μm or less, preferably 0.03 μm or more and 5 μm or less, and more preferably 0.05 μm or more and 3 μm or less. Such an average particle diameter can meet the requirement for a fine particulate solid electrolyte having an average particle diameter as small as 1 μm or less.

While there is no particular limitation on the pulverization time as long as it ensures a desired average particle diameter of the electrolyte precursor, it is generally 0.1 hours or more and 100 hours or less and, from the viewpoint of efficiently obtaining the intended particle size, it is preferably 0.3 hours or more and 72 hours or less, more preferably 0.5 hours or more and 48 hours or less, and even more preferably 1 hour or more and 24 hours or less.

The pulverization may be performed after drying the electrolyte precursor-containing material, such as the electrolyte precursor-containing slurry to powder the electrolyte precursor.

In this case, among the pulverizers described above as usable in the present production method, any one of the dry pulverizers is preferably used. The conditions for the pulverization, the average particle size of the electrolyte precursor obtained by the pulverization, etc. are the same as described above with refence to the pulverization of the electrolyte precursor-containing slurry.

(State of Slurry)

The slurry for use in this embodiment generally has a slurry concentration, based on the total amount of the raw material-containing material, of about 0.5% by mass or more and about 30% by mass or less, preferably 1% by mass or more, more preferably 3% by mass or more. The upper limit of the slurry concentration is preferably 20% by mass or less, more preferably 10% by mass or less.

The content of the polar solvent in the slurry is preferably 5% by mass or more, more preferably 10% by mass or more, and even more preferably 20% by mass or more, while the upper limit may be determined depending on the above-described slurry concentration. The slurry concentration and the content of the polar solvent in the slurry may be adjusted according to the amount of the polar solvent, the amount of the other solvent, etc. described above.

[Drying]

In the production method of this embodiment, the slurry including the solid electrolyte and/or the electrolyte precursor, comprising at least an alkali metal, sulfur atoms and phosphorus atoms as constituent atoms, and preferably further comprising halogen atoms, and the polar solvent, and preferably further including a solvent, the slurry having been obtained e.g. by the above-described method, is dried by fluidized drying using a medium.

In fluidized drying using a medium, the slurry as a drying object is fluidized, and therefore has a large heat-transfer area. This enables fast uniform transfer of heat, thus enabling short-time drying. Therefore, the above-described high-temperature drying for performing uniform drying is not necessary. Even if the fluidized drying is performed at a high temperature, the drying can be completed in a short time. Accordingly, dissolution of halogen atoms caused by the heat history of high-temperature drying can be minimized. This makes it possible to prevent a deterioration in the quality of the product, such as a reduction in the ion conductivity. Further, there is no need to select a low-temperature drying in order to avoid the heat history of high-temperature drying. This eliminates the need for a long drying time, leading to excellent productivity.

In addition, since the slurry is allowed to flow using a medium, the slurry can be dried uniformly without any significant influence by the viscosity of the slurry. The fluidized drying can therefore deal with slurries having a wide range of viscosities.

When the below-described media particles are used as a medium, and fluidized drying is performed while allowing the media particles to flow in a dryer, the medium has previously been heated in the dryer and has an amount of heat. The heat-transfer area of the slurry as a drying object is increased by the fluidization of the slurry with a fluid catalytic cracking catalyst of the media particles. In addition, the slurry is heated by the amount of heat of the medium. This enables a further reduction in the drying time.

Such fluidized drying can prevent aggregation of particles due to a low-uniform drying state in a conventional batch drying method, such as vacuum drying, thereby preventing a deterioration in the quality of the product. Furthermore, fluidized drying using a medium, which can be performed by a flow process, can achieve excellent productivity. Thus, the production method of this embodiment, which employs fluidized drying using a medium, makes it possible to produce a solid electrolyte having excellent properties, such as a high ion conductivity, with higher productivity.

Any dryer that can dry the slurry as a drying object with media particles as a medium while fluidizing the slurry can be used as a dryer capable of performing fluidized drying using a medium (also referred to as a "medium fluidized bed dryer"). It is possible to use a commercially available dryer known as a fluidized bed drying apparatus, which has media particles as a medium in a dryer and performs drying while fluidizing the media particles.

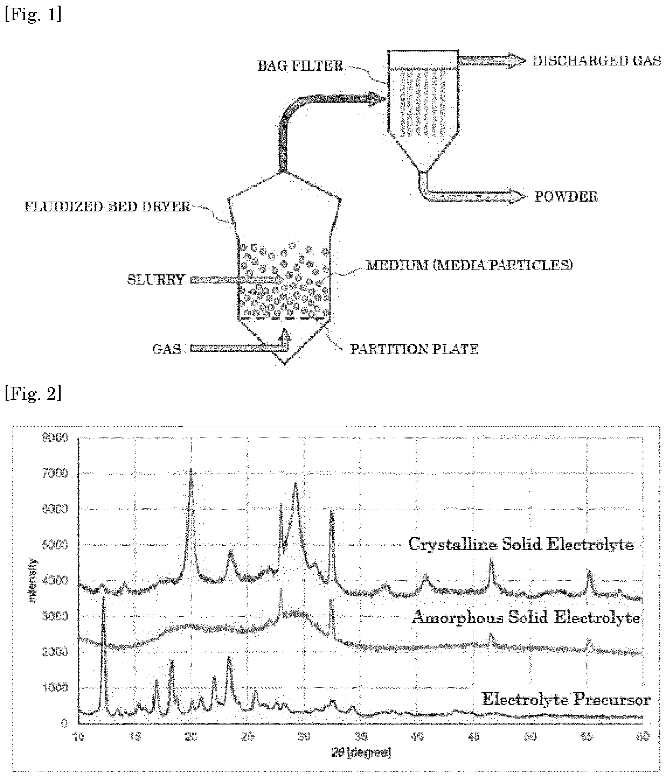

A preferred embodiment of a drying apparatus which can perform fluidized drying using a medium and which can be used in this embodiment will now be described with reference to FIG. 1. The drying apparatus shown in FIG. 1 includes a medium fluidized bed dryer which can perform fluidized drying while fluidizing media particles as a medium, and a bag filter for recovering a solid electrolyte or an electrolyte precursor in a powder form from a fluid including a gas and powder obtained by drying, i.e., a fluid including a gas and the solid electrolyte or the electrolyte precursor contained in the slurry, discharged from the dryer.

The medium fluidized bed dryer shown in FIG. 1 is of the type that uses media particles as a medium, and performs drying of the slurry by fluidizing the media particles with a gas in the dryer, and supplying the slurry into the fluidized bed of the media particles. When the slurry is supplied into the fluidized bed of the media particles, the slurry is fluidized, whereby the heat-transfer area of the slurry is increased. This enables short-time drying.

The drying apparatus includes in the dryer a partition plate preferably having openings for supplying the gas. The partition plate prevents the media particles as a medium from staying on the bottom of the dryer, and allows the particles to convect in the dryer with the gas, supplied through the openings into the dryer, to form a fluidized bed.

The medium fluidized bed dryer, at its top, has an outlet for discharging a fluid including the gas, supplied from the bottom of the dryer, and powder contained in the slurry, i.e., a solid electrolyte or an electrolyte precursor. The fluid discharged from the outlet is supplied to the bag filter. The bag filter includes a multi-stage filter. The powder in the fluid, namely the solid electrolyte or the electrolyte precursor, is collected and recovered by the filter, while the gas in the fluid is discharged from an outlet provided at the top of the bag filter.

Drying of the slurry can be performed effectively by using the media particles as a medium in the medium fluidized bed dryer, and keeping the media particles in a fluidized state with the gas as shown in FIG. 1. An inert gas such as nitrogen or argon is preferably used as the gas from the viewpoint of preventing a deterioration due to oxidation of a solid electrolyte or an electrolyte precursor and, in view further of cost, nitrogen is more preferably used.

In view of drying efficiency, fluidizability, etc., ceramic balls are preferably used as the media particles. While the particle diameter of the media particles varies depending on the size of the fluidized bed dryer, etc., it may be generally about 0.5 mm or more and about 5.0 mm or less and, in view of drying efficiency, fluidizability, etc., it is preferably 1.0 mm or more and 3.0 mm or less. When the particle diameter of the media particles is within the above range, the media particles can be prevented from being discharged out of the dryer together with the fluid including the gas and the solid electrolyte and/or the electrolyte precursor contained in the dried slurry. This can reduce the amount of collected powder in the bag filter.

When a gas is used to fluidize the medium, the gas is preferably pre-heated. In the case of a medium fluidized bed dryer of the type shown in FIG. 1, a gas also serves as a heat source for drying the slurry. A heated gas is therefore used.

The media particles are also preferably pre-heated. In the case of a medium fluidized bed dryer of the type shown in FIG. 1, the media particles have been heated by the heated gas. Thus, the slurry is heated by the heated gas and by such pre-heated media particles. This makes it possible to dry the slurry in a very short time.

There is no particular limitation on the opening size of the openings of the partition plate as long as it is smaller than the diameter of the media particles so that the media particles will not fall onto the bottom of the dryer. The opening size may be, for example, about 0.1 mm or more and about 3 mm or less and, in view of easiness of the supply of the medium (gas) from below, it is preferably 0.3 mm or more and 2.5 mm or less, more preferably 0.5 mm or more and 2.0 mm or less.

The fluidized drying may be performed at a temperature appropriate to the type of the polar solvent (not incorporated into the electrolyte precursor) contained in the slurry, and the type of an optional solvent other than the polar solvent. For example, the fluidized drying can be performed at a temperature equal to or higher than the boiling point of the polar solvent and the boiling point of an optional solvent other than the polar solvent. While the drying temperature thus varies depending on the boiling point of the polar solvent used, etc., and hence cannot be defined unconditionally, it is generally about 50 to about 150°C, preferably 55 to 130°C, more preferably 60 to 100°C, and even more preferably 65 to 80°C.

For example, when a medium fluidized bed dryer of the type shown in FIG. 1 is used, the temperature of the gas supplied may be generally about 60 to about 200°C and, from the viewpoint of drying the slurry in a shorter time and avoiding the heat history of high-temperature drying to enhance the product quality, it is preferably 70 to 180°C, more preferably 80 to 160°C, and even more preferably 90 to 150°C. Based on the temperature of the gas supplied, the supply rate of the gas may be made generally about 0.5 to about 10.0 m/s and, from the viewpoint of maintaining good fluidizability of the media particles, it is preferably made 1.0 to 8.0 m/s, more preferably 1.5 to 5.0 m/s, and even more preferably 2.0 to 3.5 m/s. The supply rate of the gas is expressed in terms of a linear velocity with respect to the area of a cross-section of the fluidized bed of the media particles as a medium in a direction perpendicular to the flow direction of the gas (in other words, the area of a cross-section of a container, in which the media particles are housed, in the dryer in a direction perpendicular to the flow direction of the gas).

The temperature of the fluid at the outlet of the fluidized bed dryer is generally about 50 to about 120°C and, from the same viewpoint, it is preferably 55 to 100°C, more preferably 60 to 90°C, and even more preferably 65 to 80°C. When the temperature of the fluid is within the above range, the drying temperature in the fluidized bed dryer can be easily adjusted to the above-described range of the drying temperature. The temperature of the fluid can be adjusted by the supply rate and temperature of the gas, the supply rate of the slurry, etc., in particular by the supply rate of the slurry.

As shown in FIG. 1, a bag filter is preferably used in the production method of this embodiment from the viewpoint of efficiently collecting the powder obtained by drying, namely the solid electrolyte or the electrolyte precursor.

Any filter can be used without any particular limitation in the bag filter. Examples of usable filters include filters made of materials such as polypropylene, nylon, acrylic, polyester, cotton, wool, heat-resistant nylon, polyamide/polyimide, PPS (polyphenylene sulfide), glass fibers, and PTFE (polytetrafluoroethylene). A functionalized filter such as an electrostatic filter can also be used. Among them, filters made of heat-resistant nylon, polyamide/polyimide, PPS (polyphenylene sulfide), glass fibers, or PTFE (polytetrafluoroethylene) are preferred, filters made of heat-resistant nylon, PPS (polyphenylene sulfide), or PTFE (polytetrafluoroethylene) are more preferred, and a filter made of PTFE (polytetrafluoroethylene) is especially preferred.

The bag filter may have a brushing-off means. For example, a pulsating back pressure-type means and a pulse jet-type means are preferred, and a pulse jet-type means is especially preferred.

An induced draft fan may be provided in a line from an exhaust port of the bag filter to forcibly discharge the gas from the exhaust port. By discharging the gas using an induced draft fan or the like, filtration in the bag filter proceeds smoothly and a stable fluidized bed of media particles can be obtained in the fluidized bed dryer. This makes it possible to dry the slurry in a shorter time.

(Powder Obtained by Drying)

The powder obtained by the drying comprises a solid electrolyte and/or an electrolyte precursor.

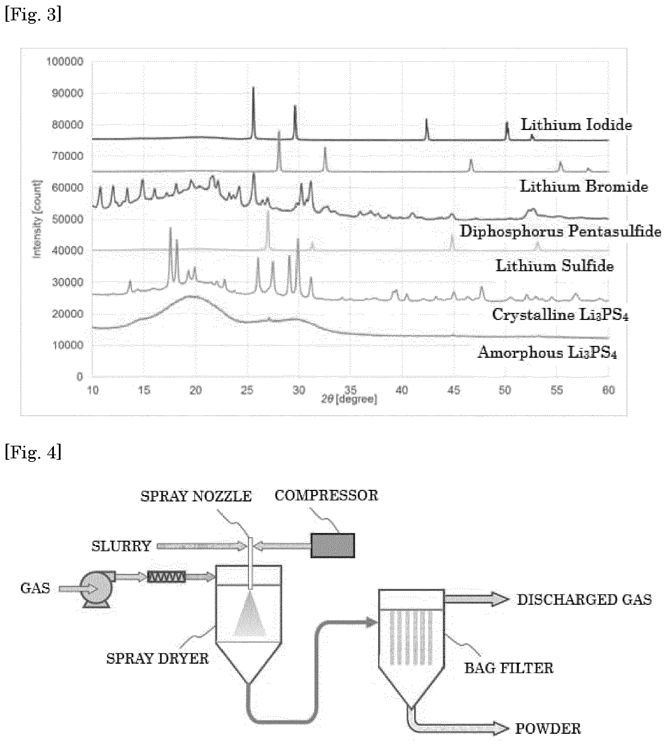

The precursor of the solid electrolyte is characterized in that it is composed of the polar solvent, lithium atoms, sulfur atoms, phosphorus atoms, and preferably also of halogen atoms, and that in an X-ray diffraction pattern obtained from X-ray diffraction measurement of the precursor, peaks different from peaks derived from the raw materials are observed. The precursor preferably comprises a co-crystal composed of the polar solvent, lithium atoms, sulfur atoms, phosphorus atoms, and preferably also of halogen atoms. When only the raw material-containing material is mixed, only peaks derived from the raw materials are observed, whereas when the raw material-containing material and the polar solvent are mixed, peaks different from the peaks derived from the raw materials are observed. Thus, the electrolyte precursor (co-crystal) has a structure which is clearly different from those of the raw materials contained in the raw material-containing material. This fact is specifically verified by data in Examples. FIGS. 2 and 3 respectively show a measured X-ray diffraction pattern of the electrolyte precursor (co-crystal) and measured X-ray diffraction patterns of the respective raw materials, such as lithium sulfide. The X-ray diffraction pattern of FIG. 2 indicates that the electrolyte precursor (co-crystal) has a particular crystal structure. The diffraction pattern does not contain any of the diffraction patterns of the raw materials, such as lithium sulfide, shown in FIG. 3. This indicates that the electrolyte precursor (co-crystal) has a crystal structure different from the raw materials.

In addition, the electrolyte precursor (co-crystal) is characterized in that it has a structure which is also different from the crystalline solid electrolyte. This fact is also specifically verified by data in Examples. FIG. 2 also shows a measured X-ray diffraction pattern of the crystalline solid electrolyte. This diffraction pattern is different from the diffraction pattern of the electrolyte precursor (co-crystal). The electrolyte precursor (co-crystal) has the particular crystal structure which also differs from the amorphous solid electrolyte having a broad pattern as shown in FIG. 2.

The co-crystal is composed of the polar solvent, lithium atoms, sulfur atoms, phosphorus atoms, and preferably also of halogen atoms. It is presumed that the co-crystal typically has a complex structure in which a lithium atom and other atoms are bound together via the polar solvent and/or directly bonded together not via the polar solvent.

The fact that the polar solvent constitutes the co-crystal can be confirmed, for example, by gas chromatography. In particular, the polar solvent contained in the co-crystal can be quantified by dissolving powder of the electrolyte precursor in methanol, and subjecting the resulting methanol solution to gas chromatography.

While the content of the polar solvent in the electrolyte precursor varies depending on the molecular weight of the polar solvent, it is generally about 10% by mass or more and about 70% by mass or less, preferably 15% by mass or more and 65% by mass or less.

In the solid electrolyte production method of this embodiment, to form a halogen atom-containing co-crystal is preferred from the viewpoint of increasing the ion conductivity. The use of the polar solvent enables the formation of a co-crystal in which a lithium-containing structure, such as a $PS_4$ structure, and a lithium-containing raw material, such as a lithium halide, are bonded (coordinated) together via the polar solvent, and halogen atoms are more dispersed and fixed, and which therefore has an increased ion conductivity.

The fact that halogen atoms in the electrolyte precursor constitute the co-crystal can be confirmed by the fact that after the electrolyte precursor-containing material is subjected to solid-liquid separation, the electrolyte precursor contains a certain amount of halogen atoms. This is because halogen atoms, not constituting the co-crystal, are easily dissolved as compared to halogen atoms constituting the co-crystal, and discharged into the liquid upon the solid-liquid separation. The above fact can also be confirmed by the fact that when the electrolyte precursor or the solid electrolyte is subjected to compositional analysis by ICP analysis (inductively coupled plasma emission spectroscopy), the analytical results indicate that the proportion of halogen atoms in the electrolyte precursor or the solid electrolyte is not significantly low as compared to the proportion of halogen atoms in the raw materials supplied.

The amount of halogen atoms remaining in the electrolyte precursor is preferably 30% by mass or more, more preferably 35% by mass or more, and even more preferably 40% by mass or more of the starting composition. The upper limit of the amount of halogen atoms remaining in the electrolyte precursor is 100% by mass.

(Heating)

The solid electrolyte production method of this embodiment may further comprise heating. By heating the electrolyte precursor obtained by the above-described drying, an amorphous solid electrolyte or a crystalline solid electrolyte can be obtained. The crystallinity of the solid electrolyte obtained by the above-described drying is increased by heating it, and therefore a crystalline solid electrolyte can be obtained. The polar solvent that remains in the solid electrolyte and/or the electrolyte precursor after the above-described drying can be removed by heating the solid electrolyte and/or the electrolyte precursor, resulting in the formation of an amorphous solid electrolyte or a crystalline solid electrolyte comprising lithium atoms, sulfur atoms and phosphorus atoms, and preferably further comprising halogen atoms.

The removal of the polar solvent from the electrolyte precursor can be confirmed by the fact that while the polar solvent constitutes the co-crystal of the electrolyte precursor as determined by the results of X-ray diffraction analysis, gas chromatography, or the like, the solid electrolyte obtained by heating the electrolyte precursor has the same X-ray diffraction pattern as that of a solid electrolyte obtained by the conventional method without using a polar solvent.

In the production method of this embodiment, the solid electrolyte is obtained by heating the electrolyte precursor to remove the polar solvent from the electrolyte precursor. While the content of the polar solvent in the solid electrolyte is preferably as low as possible, the solid electrolyte may contain the polar solvent in such an amount as not to impair the performance of the solid electrolyte. The content of the polar solvent in the solid electrolyte may be generally 10% by mass or less, and it is preferably 5% by mass or less, more preferably 3% by mass or less, and even more preferably 1% by mass or less.

In the production method of this embodiment, the crystalline solid electrolyte may be obtained by heating the electrolyte precursor, or by heating the electrolyte precursor to obtain an amorphous solid electrolyte, and then heating the amorphous solid electrolyte. Thus, the production method of this embodiment can also produce an amorphous solid electrolyte.

In the solid electrolyte production method of this embodiment, whether to produce an amorphous solid electrolyte or a crystalline solid electrolyte, and whether to produce a crystalline solid electrolyte via an amorphous solid electrolyte or directly from an electrolyte precursor, can be selected as desired while making adjustments of the heating temperature, the heating time, etc.

For example, when an amorphous solid electrolyte is to be produced, the heating temperature of the electrolyte precursor may be determined according to the structure of a crystalline solid electrolyte which is to be obtained by heating the amorphous solid electrolyte (or the electrolyte precursor). In particular, the amorphous solid electrolyte (or the electrolyte precursor) is subjected to differential thermal analysis (DTA) using a differential thermal analysis device (DTA device) at a temperature rise rate of 10°C/min, and the temperature corresponding to the top of the lowest-temperature one of exothermic peaks is measured. The heating temperature of the electrolyte precursor may be set at a temperature which is lower than the measured temperature preferably by 5°C or less, more preferably by 10°C or less, and even more preferably by 20°C or less. While there is no particular limit on the lower limit of the heating temperature, it may be set at a temperature which is higher than the measured temperature by about -40°C or more. By heating the electrolyte precursor at a temperature in such a range, the amorphous solid electrolyte can be obtained more efficiently and securely. While the heating temperature for obtaining the amorphous solid electrolyte varies depending on the structure of a crystalline solid electrolyte to be produced, and hence can not be defined unconditionally, in general, it is preferably 135°C or less, more preferably 130°C or less, and even more preferably 125°C or less. The lower limit, which is not particularly limited, is preferably 50°C or more, more preferably 70°C or more, even more preferably 80°C or more, still more preferably 100°C or more, and especially preferably 110°C or more.

When a crystalline solid electrolyte is obtained by heating an amorphous solid electrolyte or directly from an electrolyte precursor, the heating temperature may be determined according to the structure of the crystalline solid electrolyte, and it is preferably higher than the above-described heating temperature for obtaining an amorphous solid electrolyte. In particular, the amorphous solid electrolyte (or the electrolyte precursor) is subjected to differential thermal analysis (DTA) using a differential thermal analysis device (DTA device) at a temperature rate of 10°C/min, and the temperature corresponding to the top of the lowest-temperature one of exothermic peaks is measured. The heating temperature of the electrolyte precursor may be set at a temperature which is higher than the measured temperature preferably by 5°C or more, more preferably by 10°C or more, and even more preferably by 20°C or more. While there is no particular limit on the higher limit of the heating temperature, it may be set at a temperature which is lower than the measured temperature by about 40°C or less. By heating the amorphous solid electrolyte at a temperature in such a range, the crystalline solid electrolyte can be obtained more efficiently and securely. While the heating temperature for obtaining the crystalline solid electrolyte varies depending on the structure of the crystalline solid electrolyte, in general, and hence can not be defined unconditionally, it is preferably 130°C or more, more preferably 135°C or more, and even more preferably 140°C or more. The upper limit, which is not particularly limited, is preferably 300°C or less, more preferably 280°C or less, and even more preferably 250°C or less.

While there is no particular limitation on the heating time as long as it is sufficient to obtain the intended amorphous solid electrolyte or crystalline solid electrolyte, it is preferably 1 minute or more, more preferably 10 minutes or more, even more preferably 30 minutes or more, and still more preferably 1 hour or more. The upper limit of the heating time, which is not particularly limited, is preferably 24 hours or less, more preferably 10 hours or less, even more preferably 5 hours or less, and still more preferably 3 hours or less.

The heating is preferably performed in an inert gas atmosphere (e.g., a nitrogen atmosphere or an argon atmosphere) or in a reduced pressure atmosphere (especially in vacuum). This is because deterioration (e.g., oxidation) of the crystalline solid electrolyte can be prevented. A heating method is not particularly limited; for example, a method which uses a hot plate, a vacuum heating device, an argon gas-atmosphere furnace, or a firing furnace may be used. A horizontal dryer, a horizontal vibration fluidized bed dryer, or the like, having a heating means and a feed mechanism, may also be used industrially. An appropriate device may be selected according to the amount of the heating object.

(Amorphous Solid Electrolyte)

The amorphous solid electrolyte obtained by the solid electrolyte production method of this embodiment comprises lithium atoms, sulfur atoms, phosphorus atoms, and halogen atoms. Typical examples of the amorphous solid electrolytes include solid electrolytes composed of lithium sulfide, phosphorus sulfide and a lithium halide, for example, $Li_2S-P_2S_5-LiI$, $Li_2S-P_2S_5-LiCl$, $Li_2S-P_2S_5-LiBr$, and $Li_2S-P_2S_5-LiI-LiBr$; and solid electrolytes further containing other atoms such as oxygen atoms and silicon atoms, preferably for example, $Li_2S-P_2S_5-Li_2O-LiI$ and $Li_2S-SiS_2-P_2S_5-LiI$. From the viewpoint of obtaining a higher ion conductivity, solid electrolytes composed of lithium sulfide, phosphorus sulfide and a lithium halide, such as $Li_2S-P_2S_5-LiI$, $Li_2S-P_2S_5-LiCl$, $Li_2S-P_2S_5-LiBr$, and $Li_2S-P_2S_5-LiI-LiBr$, are preferred.

The types of the atoms constituting the amorphous solid electrolyte can be determined by, for example, an ICP (inductively coupled plasma) emission spectrometer.

When the amorphous solid electrolyte obtained by the solid electrolyte production method of this embodiment comprises at least $Li_2S-P_2S_5$, the molar ratio between $Li_2S$ and $P_2S_5$ is preferably 65-85:15-35, more preferably 70-80:20-30, and even more preferably 72-78:22-28 from the viewpoint of obtaining a higher ion conductivity.

When the amorphous solid electrolyte obtained by the solid electrolyte production method of this embodiment comprises $Li_2S-P_2S_5-LiI-LiBr$, the total content of lithium sulfide and diphosphorus pentasulfide is preferably 60 to 95 mol %, more preferably 65 to 90 mol %, and even more preferably 70 to 85 mol %. The proportion of lithium bromide based on the total amount of lithium bromide and lithium iodide is preferably 1 to 99 mol %, more preferably 20 to 90 mol %, even more preferably 40 to 80 mol %, and especially preferably 50 to 70 mol %.

In the amorphous solid electrolyte obtained by the solid electrolyte production method of this embodiment, the compositional ratio (molar ratio) between lithium atoms, sulfur atoms, phosphorous atoms and halogen atoms is preferably 1.0-1.8:1.0-2.0:0.1-0.8:0.01-0.6, more preferably 1.1-1.7:1.2-1.8:0.2-0.6:0.05-0.5, and even more preferably 1.2-1.6:1.3-1.7:0.25-0.5:0.08-0.4. When a combination of bromine and iodine is used as a halogen, the compositional ratio (molar ratio) between lithium atoms, sulfur atoms, phosphorus atoms, bromine atoms and iodine atoms is preferably 1.0-1.8:1.0-2.0:0.1-0.8:0.01-3.0:0.01-0.3, more preferably 1.1-1.7:1.2-1.8:0.2-0.6:0.02-0.25:0.02-0.25, even more preferably 1.2-1.6:1.3-1.7:0.25-0.5:0.03-0.2:0.03-0.2, and still more preferably 1.35-1.45:1.4-1.7:0.3-0.45:0.04-0.18:0.04-0.18. By making the compositional ratio (molar ratio) between lithium atoms, sulfur atoms, phosphorous atoms and halogen atoms fall within the above range, a solid electrolyte having the below-described thio-LISICON Region II-type crystal structure and having a higher ion conductivity can be easily obtained.

There is no particular limitation on the form of the amorphous solid electrolyte; for example, it has a particulate form. The average particle diameter $(D_{50})$ of the particulate amorphous solid electrolyte is, for example, in the range of 0.01 to 500 $\mu$m, preferably 0.1 to 200 $\mu$m.

(Crystalline Solid Electrolyte)

The crystalline solid electrolyte obtained by the solid electrolyte production method of this embodiment may be a so-called glass ceramics which is obtained by heating the amorphous solid electrolyte to a crystallization temperature or higher. Examples of its crystal structure include an $Li_3PS_4$ crystal structure, an $Li_4P_2S_6$ crystal structure, an $Li_7PS_6$ crystal structure, an $Li_7P_3S_{11}$ crystal structure, and a crystal structure having peaks at around $2\theta = 20.2°$ and $23.6°$ (see, for example, JP 2013-16423 A).

Examples of the crystal structure also include a crystal structure which can have a $PS_4^{3-}$ skeleton, such as an $Li_{4-x}Ge_{1-x}P_xS_4$ thio-LISICON Region II-type crystal structure (see Kanno et al., Journal of The Electrochemical Society, 148 (7) A742-746 (2001)) or a crystal structure similar to the $Li_{4-x}Ge_{1-x}P_xS_4$ thio-LISICON Region II-type crystal structure (see Solid State Ionics, 177 (2006), 2721-2725).

The crystalline solid electrolyte obtained by the solid electrolyte production method of this embodiment is preferably a solid electrolyte having a $PS_4^{3-}$ skeleton, more preferably a solid electrolyte having a thio-LISICON Region II-type crystal structure from the viewpoint of obtaining a higher ion conductivity. The term "thio-LISICON Region II-type crystal structure" refers to either an $Li_{4-x}Ge_{1-x}P_xS_4$ thio-LISICON Region II-type crystal structure or a crystal structure similar to the $Li_{4-x}Ge_{1-x}P_xS_4$ thio-LISICON Region II-type crystal structure. While the crystalline solid electrolyte obtained by the solid electrolyte production method of this embodiment may have the thio-LISICON Region II-type crystal structure either as a component or as a main crystal, it preferably has the crystal structure as a main crystal from the viewpoint of obtaining a higher ion conductivity. As used herein, the expression "as a main crystal" means that the proportion of an object crystal structure in the overall crystal structure is 80% or more, preferably 90% or more, and more preferably 95% or more. The crystalline solid electrolyte obtained by the production method of this embodiment preferably does not contain crystalline $Li_3PS_4$ ($\beta$-$Li_3PS_4$) from the viewpoint of obtaining a higher ion conductivity.

In X-ray diffraction measurement using a CuK$\alpha$ ray, the $Li_3PS_4$ crystal structure exhibits diffraction peaks, for

example, at around $2\theta = 17.5°, 18.3°, 26.1°, 27.3°,$ and $30.0°$; the $Li_4P_2S_6$ crystal structure exhibits diffraction peaks, for example, at around $2\theta = 16.9°, 27.1°,$ and $32.5°$; the $Li_7PS_6$ crystal structure exhibits diffraction peaks, for example, at around $2\theta = 15.3°, 25.2°, 29.6°,$ and $31.0°$; the $L_{17}P_3S_{11}$ crystal structure exhibits diffraction peaks, for example, at around $2\theta = 17.8°, 18.5°, 19.7°, 21,8°, 23.7°, 25.9°, 29.6°,$ and $30.0°$; the $Li_{4-x}Ge_{1-x}P_xS_4$ thio-LISICON Region II-type crystal structure exhibits diffraction peaks, for example, at around $2\theta = 20.1°, 23.9°,$ and $29.5°$; and a crystal structure similar to the $Li_{4-x}Ge_{1-x}P_xS_4$ thio-LISICON Region II-type crystal structure exhibits diffraction peaks, for example, at around $2\theta = 20.2°$ and $23.6°$. The positions of these peaks may vary within the range of $\pm 0.5°$.

As described above, when the thio-LISICON Region II-type crystal structure is obtained in this embodiment, the crystalline solid electrolyte preferably does not contain crystalline $Li_3PS_4$ ($\beta$-$Li_3PS_4$). In this case, the solid electrolyte comprising the thio-LISICON Region II-type crystal structure preferably does not have a diffraction peak at $2\theta = 17.5°$ and $26.1°$.

There is no particular limitation on the form of the crystalline solid electrolyte; for example, it has a particulate form. The average particle diameter ($D_{50}$) of the particulate crystalline solid electrolyte is, for example, in the range of 0.01 to 500 $\mu$m, further 0.1 to 200 $\mu$m.

The solid electrolyte obtained by the solid electrolyte production method of this embodiment has a high ion conductivity and an excellent battery performance, and therefore it can be advantageously used in a battery especially when lithium atoms are employed as a conductive species. The solid electrolyte obtained by the solid electrolyte production method of this embodiment may be used for a positive electrode layer, a negative electrode layer, or an electrolyte layer. Each of such layers can be produced by a known method.

The battery preferably uses a current collector in addition to the positive electrode layer, the electrolyte layer and the negative electrode layer. The current collector may be any known one. For example, a layer of a material reactive with the solid electrolyte, such as Au, Pt, Al, Ti or Cu, coated e.g. with Au can be used as the current collector.

Examples

The following examples illustrate the present invention in greater detail and do not limit the scope of the invention in any way.

(Production Example 1)

15.3 g of lithium sulfide ($Li_2S$) and 24.7 g of diphosphorus pentasulfide ($P_2S_5$) were placed into a 1 L reaction vessel equipped with a stirring blade in a nitrogen atmosphere. After actuating the stirring blade, 400 mL of tetrahydrofuran which had been cooled to -20°C was introduced into the vessel. After allowing the temperature of the mixture to spontaneously rise to room temperature (23°C), stirring of the mixture was continued for 72 hours. The resulting reaction slurry was put into a glass filter (pore size: 40 to 100 $\mu$m) to obtain a solid, followed by drying at 90°C to obtain 38 g of $Li_3PS_4$ (purity: 90% by mass) as a white powder. The powder was subjected to powder X-ray diffraction (XRD) measurement using an X-ray diffraction (XRD) apparatus (SmartLab, manufactured by Rigaku Corporation). As a result, the X-ray diffraction spectrum exhibited a halo pattern and indicated that the powder was amorphous $Li_3PS_4$.

The white $Li_3PS_4$ powder obtained in Production Example 1 was subjected to vacuum drying at 180°C for 2 hours to obtain $\beta$-$Li_3PS_4$ (crystalline).

(Example 1)

(Stirring/Mixing)

25.5 L of cyclohexane, 440 g of lithium sulfide ($Li_2S$), 709 g of diphosphorus pentasulfide ($P_2S_5$), 139 g of lithium bromide (LiBr), 213 g lithium iodide (LiI), and 3.3 L of tetramethylethylenediamine (TMEDA) as a polar solvent were sequentially placed into a reaction vessel having a volume of 40 L and equipped with a stirring blade (anchor blade), and stirring/mixing of the mixture was continued for 12 days at a stirring speed of 80 rpm.

Next, the reaction vessel was connected to a bead mill equipped with a circulation pump ("LME4 (model number)", manufactured by Ashizawa Finetech Ltd., filled with 8.7 kg of zirconia beads having a diameter of 0.5 mm), and pulverization mixing in the bead mill was performed for 4 hours under the conditions of a pump flow rate of 2 L/min and a bead mill peripheral speed of 12 m/sec to obtain a slurry including an electrolyte precursor and the polar solvent.

(Drying)

Next, using a fluidized drying apparatus including a medium fluidized bed dryer and a bag filter, having the construction shown in FIG. 1, a gas at 100°C was supplied into the fluidized bed dryer at a supply rate of 2.4 m/s (a flow speed at 100°C, with respect to a cross-section of a fluidize bed of a medium (media particles), having a diameter of 98 mm), and the slurry was supplied into the dryer in such a manner that the temperature of a fluid including the gas and powder, discharged from the top of the medium fluidized bed dryer, became 70°C. Ceramic particles having a diameter of 2 mm were used as the media particles at a filling rate of 30 vol % based on the volume of the medium fluidized bed dryer. Nitrogen gas was used as the gas for fluidizing the media particles as a medium.

After the operation of the medium fluidized bed dryer reached a steady state, drying was continued for 48 hours, and powder of an electrolyte precursor, collected by the bag filter, was heated at 110°C under vacuum for 2 hours to obtain an amorphous solid electrolyte. The amorphous solid electrolyte was heated at 180°C under vacuum for 2 hours to obtain a crystalline solid electrolyte (a heating temperature for obtaining a crystalline solid electrolyte (180°C in this example) is sometimes referred to as "crystallization temperature"). The supply rate of the slurry, and the amount and average particle diameter of the crystalline solid electrolyte obtained are shown in Table 1. The temperature 70°C (dryer outlet temperature) of the fluid discharged from the top of the fluidized bed dryer was only a target value, and the actual temperature somewhat fluctuated; the dryer outlet temperature in Example 1, shown in Table 1, is an average value during the 48-hour drying.

Part of the electrolyte precursor powder and part of the crystalline solid electrolyte powder were each dissolved in methanol, and the resulting methanol solution was analyzed by gas chromatography to measure the content of tetramethylethylenediamine. As a result, its content in the electrolyte precursor was found to be 55.0% by mass, and its content in the crystalline solid electrolyte was found to be 1.2% by mass.

The electrolyte precursor, the amorphous solid electrolyte and the crystalline solid electrolyte obtained ware subjected to powder X-ray diffraction (XRD) measurement using an X-ray diffraction (XRD) apparatus (SmartLab, manufactured by Rigaku Corporation). FIG. 2 shows X-ray diffraction spectra of these materials.

In the X-ray diffraction spectrum of the electrolyte precursor, peaks different from peaks derived from the raw materials used were observed. The X-ray diffraction spectrum had an X-ray diffraction pattern different from those of the amorphous solid electrolyte and the crystalline solid electrolyte. The raw materials used in Example 1 (amorphous $Li_3PS_4$, lithium bromide, and lithium iodide) and the raw materials used in other Examples (lithium sulfide, diphosphorus pentasulfide, and crystalline $Li_3PS_4$) were also subjected to powder X-ray diffraction (XRD) measurement. FIG. 3 shows X-ray diffraction spectra of the raw materials. The X-ray diffraction spectrum of the electrolyte precursor had an X-ray diffraction pattern different from the X-ray diffraction spectra of the raw materials.

In the X-ray diffraction spectrum of the amorphous solid electrolyte, there were no peaks other than those derived from the raw materials. In the X-ray diffraction spectrum of the crystalline solid electrolyte, crystallization peaks were detected mainly at $2\theta = 20.2°$ and $23.6°$; the crystalline solid electrolyte had a thio-LISICON Region II-type crystal structure. The ion conductivity of the crystalline solid electrolyte was measured, and found to be as high as $3.17 \times 10^{-3}$ (S/cm).

In Examples, the measurement of ion conductivity was performed in the following manner.

A circular pellet having a diameter of 10 mm (cross-sectional area S: $0.785 cm^2$) and a height (L) of 0.1 to 0.3 cm, for use as a sample, was molded from the crystalline solid electrolyte. Electrode terminals were led from the top and the bottom of the sample, and the ion conductivity was measured at 25°C by an AC impedance method (frequency range: 5 MHz to 0.5 Hz, amplitude: 10 mV) to obtain a Cole-Cole plot. In the vicinity of the right end of an arc observed in the high frequency-side region, a real number part Z' ($\Omega$) at a point at which -Z" ($\Omega$) is the smallest was taken as the bulk resistance R ($\Omega$) of the electrolyte, and the ion conductivity $\sigma$ (S/cm) was calculated according to the following equations.

$$R = \rho \, (L/S)$$

$$\sigma = 1/\rho$$

(Examples 2 and 3)

A crystalline solid electrolyte was produced in the same manner as in Example 1 except that the temperature of the gas supplied into the fluidized bed dryer was changed to the temperature shown in Table 1, and that the supply rate of the slurry was changed so that the temperature of a fluid including the gas and powder, discharged from the top of the fluidized bed dryer, became 70°C. The supply rate of the slurry, the amount of the crystalline solid electrolyte obtained, and the ion conductivity of the crystalline solid electrolyte are shown in Table 1.

(Comparative Examples 1)

A crystalline solid electrolyte was produced in the same manner as in Example 1 except that the slurry was dried (at room temperature: 23°C) under vacuum to obtain powder of an electrolyte precursor. The ion conductivity of the crystalline solid electrolyte is shown in Table 1.

Table 1

|  |  | Example | | | Comp. Ex |
|---|---|---|---|---|---|
|  |  | 1 | 2 | 3 | 1 |
| Temperature of gas supplied | °C | 100 | 120 | 140 | - |
| Dryer outlet temperature | °C | 70.9 | 69.5 | 71.9 | - |
| Supply rate of gas | m/s | 2.4 | 2.4 | 2.4 | - |
| Supply rate of slurry | g/min | 58.2 | 110 | 153 | - |
|  | kg/day | 84 | 158 | 220 | - |
| Production of solid electrolyte | g/min | 2.9 | 5.5 | 7.7 | - |
|  | kg/day | 4.2 | 7.9 | 11.1 | - |
| Ion conductivity | mS/cm | 3.17 | - | 3.21 | 2.9 |

The data of Examples 1 to 3 indicates that the production method of this embodiment can dry a large amount of the slurry of 84 to 220 kg/day, and can produce a large amount of the solid electrolyte of 4.2 to 11.1 kg/day, thus indicating a very high productivity of the production method of this embodiment. The data also indicates that the ion conductivities of the solid electrolytes of Examples 1 to 3, which are 3.17 to 3.21 mS/cm, are higher than the ion conductivity 2.9 mS/cm of the solid electrolyte of Comparative Example 1 in which drying was performed by vacuum drying.
In addition, it was confirmed that the vacuum drying of Comparative Example 1 took a long drying time. Further, because of batchwise drying, the amount of the slurry processed (production of the solid electrolyte) in Comparative Example 1 was significantly small as compared to Examples. This indicates inferior productivity of the comparative drying method.

(Comparative Example 2)

In Example 1, cyclohexane was changed to toluene, the slurry concentration was changed to 10% by mass, and drying was performed using a spray dryer-type drying apparatus (micromist spray dryer "MDL-050 (C)M (model number)", manufactured by GF Corporation) instead of the fluidized drying apparatus including a medium fluidized bed dryer and a bag filter, having the construction shown in FIG. 1 in terms of drying. The spray dryer shown in FIG. 4 is configured to spray a slurry from a spray nozzle using a gas, and bring the slurry into contact with a heated gas, supplied from a different line, to dry the slurry. Though not shown diagrammatically, the spray dryer includes two injection lines, one of which is called a four-fluid nozzle. The four-fluid nozzle includes two nozzles for spraying a slurry and two nozzles for spraying a gas.
Using the spray dryer shown in FIG. 4 as a drying apparatus, a heated gas at 150°C was supplied into the spray dryer at a supply rate of 0.02 m/s (a flow speed at 100°C, with respect to a cross-section of the spray dryer (diameter: 1000 mm)) while a gas was supplied to the nozzle at a supply rate of 40 NL/min and the slurry was supplied into the dryer at a supply rate of 13 g/min. Nitrogen gas was used as the gas, and the operation was continued for one hour.
After completion of the operation, the two injection lines were visually checked. As a result, it was found that at least one of a tube and a nozzle for spraying the slurry in one injection line was blocked, which would adversely affect continued operation. The ion conductivity of the crystalline solid electrolyte obtained is shown in Table 2.

(Comparative Example 3)

Continued operation was carried out for 30 minutes in the same manner as in Comparative Example 2 except that the supply rate of the slurry was changed to 11 g/min as shown in Table 2.
After completion of the operation, the two injection lines were visually checked. As a result, it was found that at least one of a tube and a nozzle for spraying the slurry in one injection line was blocked, which would adversely affect continued operation. The ion conductivity of the crystalline solid electrolyte obtained is shown in Table 2.

Table 2.

| | | Comp. Example | |
|---|---|---|---|
| | | 2 | 3 |
| Temperature of gas supplied | °C | 150 | 150 |
| Dryer outlet temperature | °C | 96 | 94 |
| Amount of gas supplied | m/s | 0.02 | 0.02 |
| Amount of slurry supplied | g/min | 13 | 11 |
| | kg/hr | 0.78 | 0.66 |
| Production of solid electrolyte | g/hr | 53.9 | 21.0 |
| Ion conductivity | mS/cm | 2.68 | 2.23- |

As described above, blocking of the injection line was observed in Comparative Examples 2 and 3 even though the drying operation was performed for a short period of time of 1 hour or 30 minutes. As with the fluidized drying apparatus used in Examples 1 to 3, the spray dryer used as a drying apparatus in Comparative Examples 2 and 3 is designed to be generally capable of long-term continuous operation; however, it could not withstand the continuous operation to produce a solid electrolyte.

The proportions (recovery rates) of the production of a solid electrolyte based on the supply rate of the solid electrolyte by the supply of the slurry in Comparative Examples 2 and 3 were 70.9% and 63.5%, respectively. On the other hand, the recovery rates in Examples 1 to 3 were about 90%. This indicates that the spray dryer is inferior to the medium fluidized bed dryer also in terms of the recovery rate. It is conceivable that in Comparative Examples 2 and 3, a solid electrolyte which was not recovered, was kept in an inadequately dried state for a relatively long period of time, and was attached to and remained on the inner wall of the spray dryer and the inner wall of the bag filter. On the other hand, fluidized drying can quickly dry a solid electrolyte. Attachment of the solid electrolyte to the inner wall of the dryer, etc. will therefore be reduced, leading to a high recovery rate.

It was also confirmed that the difference in drying method produces a difference in the ion conductivity of the dried solid electrolyte: a solid electrolyte having a higher ion conductivity can be obtained by the fluidized drying employed in the production method of this embodiment.

Industrial Applicability

According to the solid electrolyte production method of this embodiment, a solid electrolyte having a high ion conductivity can be provided at low cost with high productivity using a liquid-phase method. The solid electrolyte obtained by the production method of this embodiment can be advantageously used in batteries, in particular batteries for use in information devices and communication devices, such as personal computers, video cameras and mobile phones.

**Claims**

1. A method for producing a solid electrolyte, comprising drying a slurry by fluidized drying using media particles as a medium, the slurry including a solid electrolyte comprising at least an alkali metal, sulfur atoms and phosphorus atoms as constituent atoms, or a precursor of the solid electrolyte, and a polar solvent.

2. The method for producing a solid electrolyte according to claim 1, wherein the solid electrolyte further comprises halogen atoms as constituent atoms.

3. The method for producing a solid electrolyte according to claim 1 or 2, wherein the precursor of the solid electrolyte has a structure in which the alkali metal, the sulfur atoms and the phosphorus atoms are bonded together via the polar solvent and/or directly bonded together not via the polar solvent, said structure being obtained by using a raw material-containing material comprising the constituent atoms, and the polar solvent.

4. The method for producing a solid electrolyte according to any one of claims 1 to 3, wherein the polar solvent contains at least one type of atoms selected from nitrogen atoms, oxygen atoms and halogen atoms.

5. The method for producing a solid electrolyte according to any one of claims 1 to 4, wherein the polar solvent has an amino group.

6. The method for producing a solid electrolyte according to any one of claims 1 to 5, wherein the polar solvent has two tertiary amino groups.

7. The method for producing a solid electrolyte according to any one of claims 1 to 6, wherein the slurry further includes another solvent.

8. The method for producing a solid electrolyte according to any one of claims 1 to 7, wherein the content of the polar solvent in the slurry before drying is 5% by mass or more.

9. The method for producing a solid electrolyte according to any one of claims 1 to 8, wherein the fluidized drying is performed using a medium fluidized bed dryer having a mechanism for fluidizing the media particles with a gas.

10. The method for producing a solid electrolyte according to any one of claims 1 to 9, wherein the media particles are ceramic particles.

11. The method for producing a solid electrolyte according to claim 9 or 10, wherein the gas is an inert gas.

12. The method for producing a solid electrolyte according to any one of claims 9 to 11, wherein the gas has been heated.

13. The method for producing a solid electrolyte according to any one of claims 1 to 12, wherein the drying is performed in a circulating manner.

14. The method for producing a solid electrolyte according to any one of claims 1 to 13, wherein powder obtained by the drying is collected in a bag filter.

15. The method for producing a solid electrolyte according to claim 14, wherein a filter of the bag filter is made of polytetrafluoroethylene.

[Fig. 1]

[Fig. 2]

[Fig. 3]

[Fig. 4]

## INTERNATIONAL SEARCH REPORT

| | International application No. |
|---|---|
| | PCT/JP2021/017663 |

| A. CLASSIFICATION OF SUBJECT MATTER |
|---|
| H01M 10/0562(2010.01)i; H01B 1/06(2006.01)i; H01B 13/00(2006.01)i<br>FI: H01B13/00 Z; H01M10/0562; H01B1/06 A |
| According to International Patent Classification (IPC) or to both national classification and IPC |

| B. FIELDS SEARCHED |
|---|
| Minimum documentation searched (classification system followed by classification symbols)<br>H01M10/0562; H01B1/06; H01B13/00 |
| Documentation searched other than minimum documentation to the extent that such documents are included in the fields searched<br>　Published examined utility model applications of Japan　　　　　1922–1996<br>　Published unexamined utility model applications of Japan　　　　1971–2021<br>　Registered utility model specifications of Japan　　　　　　　　　1996–2021<br>　Published registered utility model applications of Japan　　　　1994–2021 |
| Electronic data base consulted during the international search (name of data base and, where practicable, search terms used) |

| C. DOCUMENTS CONSIDERED TO BE RELEVANT |

| Category* | Citation of document, with indication, where appropriate, of the relevant passages | Relevant to claim No. |
|---|---|---|
| Y<br>A | JP 2017-188352 A (IDEMITSU KOSAN CO., LTD.) 12 October 2017 (2017-10-12) claims, paragraphs [0025], [0036]-[0037] | 1-5, 7-15<br>6 |
| Y<br>A | JP 2013-137510 A (KANAZAWA SEAL INC.) 11 July 2013 (2013-07-11) paragraphs [0031]-[0032] | 1-5, 7-15<br>6 |
| Y | JP 2014-225425 A (IDEMITSU KOSAN CO., LTD.) 04 December 2014 (2014-12-04) paragraphs [0026]-[0033] | 5 |

☐　Further documents are listed in the continuation of Box C.　　☒　See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 　08 June 2021 (08.06.2021) | 　20 July 2021 (20.07.2021) |

| Name and mailing address of the ISA/<br>　Japan Patent Office<br>　3-4-3, Kasumigaseki, Chiyoda-ku,<br>　Tokyo 100-8915, Japan | Authorized officer |
|---|---|
| | Telephone No. |

Form PCT/ISA/210 (second sheet) (January 2015)

<div align="center">

**INTERNATIONAL SEARCH REPORT**

Information on patent family members

</div>

International application No.

PCT/JP2021/017663

| Patent Documents referred in the Report | Publication Date | Patent Family | Publication Date |
|---|---|---|---|
| JP 2017-188352 A | 12 Oct. 2017 | (Family: none) | |
| JP 2013-137510 A | 11 Jul. 2013 | US 2014/0234593 A1 paragraphs [0088]-[0089] WO 2013/058273 A1 EP 2770031 A1 CN 103890120 A | |
| JP 2014-225425 A | 04 Dec. 2014 | US 2016/0104916 A paragraphs [0069]-[0083] WO 2014/174829 A1 | |

Form PCT/ISA/210 (patent family annex) (January 2015)

**EP 4 152 464 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014191899 A
- WO 2014192309 A
- JP 2019169459 A
- JP 2010140893 A
- JP 2013016423 A

### Non-patent literature cited in the description

- **KANNO et al.** *Journal of The Electrochemical Society,* 2001, vol. 148 (7), A742-746
- *Solid State Ionics,* 2006, vol. 177, 2721-2725